# EUROPEAN PATENT SPECIFICATION

(11) **EP 1 292 870 B1**
(45) Date of publication and mention of the grant of the patent: **11.01.2006**
(21) Application number: 01930215.7
(22) Date of filing: 18.05.2001
(51) Int. Cl.: G06F 1/00

(54) **INFORMATION SERVICE TERMINAL**
INFORMATIONSDIENSTGERÄT
TERMINAL DE SERVICE D'INFORMATION

(30) Priority: 22.05.2000 JP 2000150120
(43) Date of publication of application: 19.03.2003
(73) Proprietor: MATSUSHITA ELECTRIC INDUSTRIAL CO., LTD., Kadoma-shi, Osaka 571-0050 (JP)
(72) Inventor: OTSUBO, Tetsuro, Kouhoku-ku, Yokohama-shi Kanagawa 223-00 (JP); USHIGOME, Natsuki, Yokohama-shi Kanagawa 221-0005 (JP)
(74) Representative: Grünecker, Kinkeldey, Stockmair & Schwanhäusser Anwaltssozietät
(86) International application number: PCT/JP2001/004186
(87) International publication number: WO 2001/090857

(56) References cited:
- WO-A-97/36221
- DE-A- 19 710 285

## Description

### BACKGROUND OF THE INVENTION

The present invention relates to an information service terminal which is arranged to input a password through the operation of a ten key keyboard to thereby execute an authentication processing.

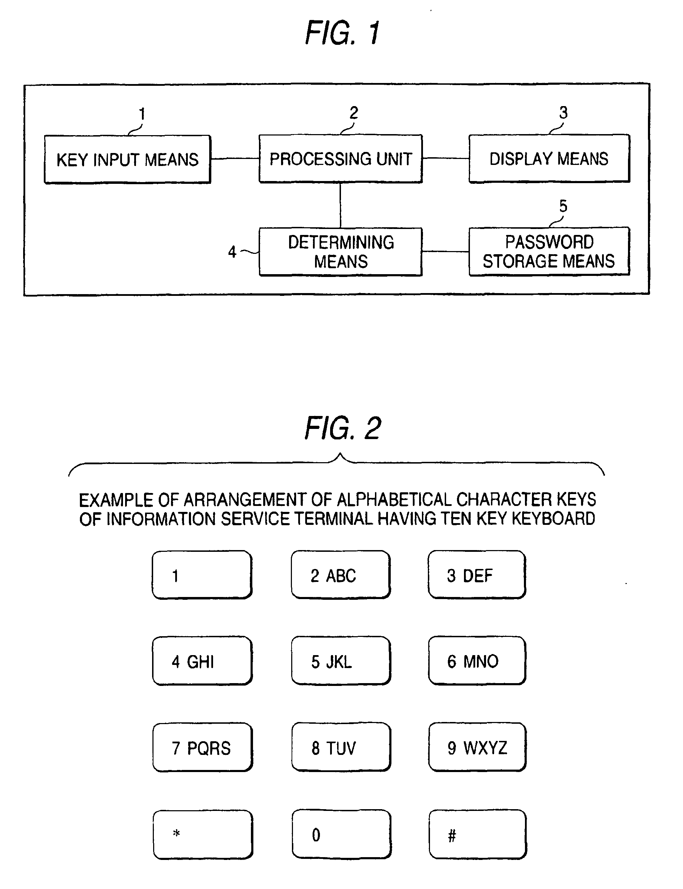

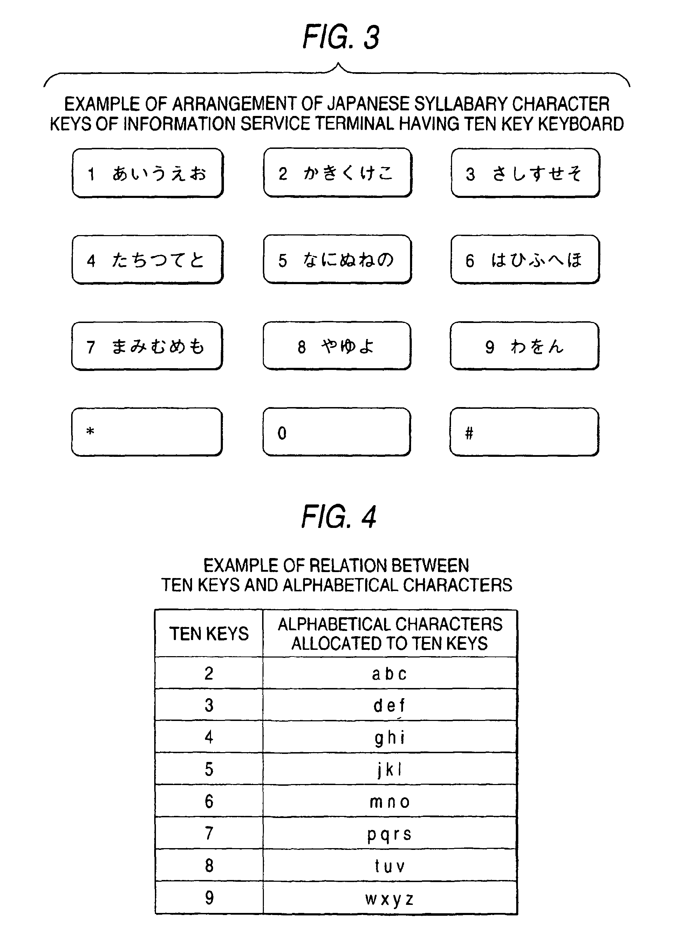

Information service terminals such as portable terminals are intended to be miniaturized by being proved with a ten key keyboard instead of a full keyboard. In the ten key keyboard, ten numeral keys of 0 to 9 and symbol keys are disposed. Further, a plurality of alphabetical characters or Japanese syllabary characters are allotted to each of the keys in order to input alphabetical characters or Japanese syllabary characters in the information service terminal (see Figs. 2 and 3). Conventionally, in such an information service terminal, the combination of numerals of 0 to 9 allotted to the numeral keys is generally inputted as a password.

However, in recent years, due to the spread of internet etc., information service terminals have been used as internet terminals. A password required upon accessing to the internet is not formed by only numerals but formed by the combination of alphabetical characters and Japanese syllabary characters etc. Thus, such a password is required to be inputted by the ten key keyboard.

In order to input alphabetical characters or Japanese syllabary characters etc. by using a ten key keyboard, it is required at each character of the password to select and determine by pushing plural times a numeral key to which alphabetical characters or Japanese syllabary characters are allotted. For example, in order to input the alphabetical character "C", in the ten key keyboard arranged as shown in Fig. 2, the numeral key "2" to which alphabetical characters "A", "B", "C" are allotted are pushed three times to thereby select and determine the alphabetical character "C".

As described above, in the case of inputting a password by using a ten key keyboard, it is required at each character of the password to perform such an operation of sequentially selecting and determining the character etc. allotted to the corresponding one numeral key. Thus, there arise problems that the number of times of operating the numeral key increases and erroneous operations likely occur. Further, in such a selecting and determining operation, since an operator is required to confirm the input operation, the selected and determined characters etc. are displayed on a screen. As a result, there also arises a problem that the password may be leaked to a third person around the operator.

DE 197 10 285 A1 suggests to increase the possible combinations of numerical characters by using alphabetical characters for PIN-codes. It is further suggested to use a keyboard in which, for example, three alphabetical characters are additionally allotted to each numerical key to provide for the possibility to type a PIN-code with either numerical and/or alphabetical characters.

WO 97/36221 describes a telephone system which provides for variable passwords to provide for additional security in case of a lost password.

### SUMMARY OF THE INVENTION

Accordingly, the invention has been made in view of the aforesaid problems of the prior art, and an object of the invention is to provide an information service terminal which, at the time of inputting a password by using a ten key keyboard, can perform the input operation quickly and easily and prevent the leakage of the password.

According to first aspect of the invention, the information service terminal includes: key input means, having a key arrangement in which a plurality of alphabetical characters or Japanese syllabary characters are allotted to each of numeral keys, for sequentially selecting and determining desired alphabetical characters or Japanese syllabary characters from the plurality of the prospected characters in accordance with the numbers of key operations; password storage means for storing a password used for authentication; determining means for determining matching between the password and alternative data representing the password; and a processing unit for, at a time of authentication, when the alternative data is inputted by an operator, determining matching between the alternative data and the password by the determining means to thereby perform authentication processing based on a result of the determination.

According to second aspect of the invention, the alternative data is formed of a numeral sequence of numeral keys to which the respective characters constituting the password are allotted, respectively.

According to third aspect of the invention, the information service terminal further includes display means for displaying a number of inputted operations performed by said key input means.

According to fourth aspect of the invention, after the authentication processing using the alternative data, the processing unit requests inputting of a password same as the password stored in the password storage means at every lapse of a predetermined period, and determines coincidence between the password thus inputted and the password stored in the password storage means to thereby perform the authentication processing based on a result of the determination.

According to fifth aspect of the invention, at a time of failure of the authentication processing using the alternative data, the processing unit requests inputting of a password same as the password stored in the password storage means, and determines coincidence between the password thus inputted and the password stored in the password storage means to thereby perform the authentication processing based on a result of the determination.

According to sixth aspect of the invention, at a time of connecting to an external network requiring authentication using a password after the authentication is succeeded in the processing, the processing unit transmits a password to the network based on the password stored in the password storage means.

According to the invention, even when a password is inputted by using the key input means such as ten keys etc., since the password can be inputted in a simplified manner using the alternative data representing the password, the inputting operation can be performed quickly and easily. Further, since the password is replaced by the alternative data, the password can be prevented from being leaked to a third person.

Further, according to the invention, since the number of the inputting operation operated by the key input means can be confirmed by the display means, the inputting operations can be executed surely.

Moreover, according to the invention, even when the authentication processing using the alternative data which is obtained by simplifying the password is succeeded accidentally, after the authentication, an authentication processing using a regular password is executed at every predetermined period, so that the security can be improved.

Moreover, according to the invention, when the authentication processing using the alternative data becomes failure, an authentication processing using a regular password is executed, so that the terminal can be prevented from being used by an illegal third party.

Moreover, according to the invention, when the information service terminal is used as a network terminal, after the completion of the authentication at the information service terminal, a password can be sent to the network without requesting an operator again to input the password. Thus, the leakage of the password accompanied by the inputting of the password can be avoided and the terminal can be connected to the network quickly.

### BACKGROUND OF THE INVENTION

Fig 1 is a block diagram showing the configuration of the information service terminal according to the embodiment of the invention;
Fig. 2 is a diagram showing the arrangement of alphabetical characters of the information service terminal having ten keys;
Fig. 3 is a diagram showing the arrangement of Japanese syllabary characters of the information service terminal having ten keys;
Fig. 4 is a diagram showing the corresponding relation between ten keys and alphabetical characters;
Fig. 5 is a diagram showing the status of a screen according to the embodiment of the invention;
Fig. 6 is a flow chart showing the authentication procedure according to the embodiment of the invention; and
Fig. 7 is a flow chart showing the authentication procedure according to the embodiment of the invention.

### DETAILED DESCRIPTION OF THE PREFERRED EMBODIMENTS

The embodiment of the invention will be explained with reference to the accompanying drawings.

Fig. 1 is a block diagram showing the information service terminal according to the invention, wherein a reference numeral 1 depicts a key input means, 2 a processing unit,3 a display means, 4 a determining means and 5 a password storage means.

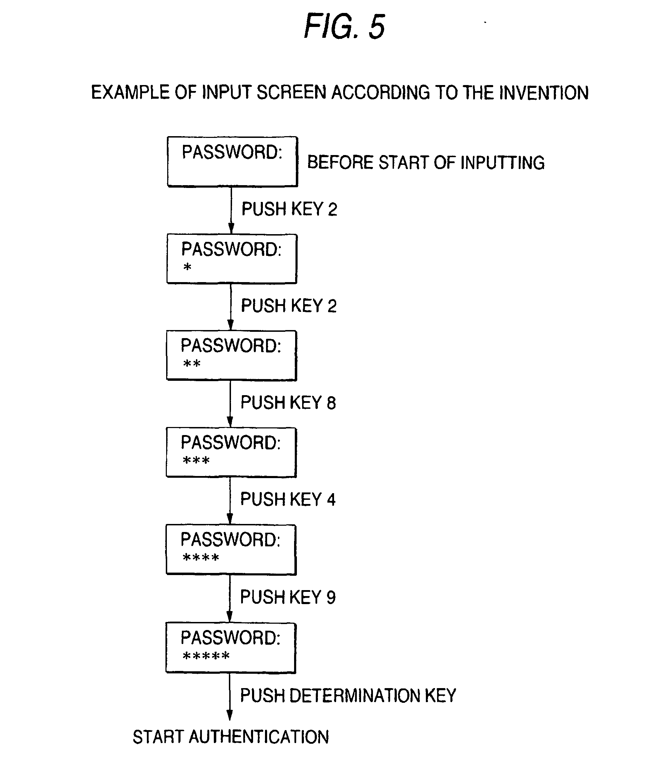

The key input means 1 includes the key arrangement wherein each numeral key is allotted with a plurality of alphabetical characters or Japanese syllabary characters as shown in Figs. 2 and 3. The key input means is arranged in a manner that a desired alphabetical character or Japanese syllabary character is sequentially selected and determined from a plurality of prospective characters in accordance with a given numbers of the key operations, and this means is explained as a ten key keyboard in this embodiment. The processing unit 2 stores the correspondence relation between the ten keys and the characters etc. in a manner that a table (Fig. 4) showing the correspondence relation between the ten keys and the alphabetical characters or Japanese syllabary characters is registered in a ROM. The display means 3 serves to recognize the key input, and also serves not only to display actually inputted characters etc. but also to display symbols etc. different from the actually inputted characters in order to confirm the numbers of the key input as described later (see Fig. 5). The determining means 4 converts a password (the combination of numerals, alphabetical characters and Japanese syllabary characters) registered in advance in the password storage means 5 into a numeral sequence of the numeral keys constituting the ten key keyboard with reference to the table registered in the processing unit 2. The processing unit 2 compares the numeral sequence (alternative data) inputted by the key input means 1 with the numeral sequence converted by the determining means 4 to thereby determine the consistency, that is, whether or not the inputted numeral sequence coincides with the password registered in advance.

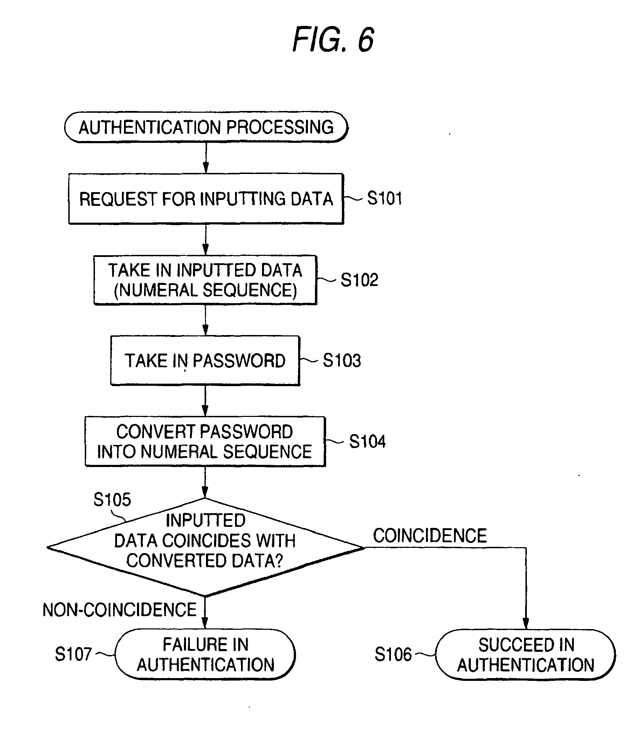

The authentication processing of the information service terminal will be explained with reference to the flowchart shown in Fig. 6. The explanation will be made supposing that the password registered in the password storage means 5 in advance is a character sequence of "cathy".

When the authentication processing is started, a password input request is displayed on the display means 3 (S101). Then, the operator operates the ten key keyboard wherein alphabetical characters or Japanese syllabary characters are allotted to each of the numeral keys as shown in Figs. 2 and 3 to push the numeral keys to which the characters etc. constituting the "cathy" are allotted. That is, the numeral key "2" corresponding to the first character "c" of the "cathy" is once pushed to determine the numeral "2", and then , the numeral key "2" corresponding to the second character "a" is once pushed to determine the numeral "2". Similarly, each of the numeral key "8" corresponding to the third character "t", the numeral key "4" corresponding to the fourth character "h" and the numeral key "9" corresponding to the fifth character "y" is once pushed to determine the respective numerals. According to these operations, the numeral sequence "22849" corresponding to the password "cathy" is obtained and then the operator pushes a determination key for executing the authentication. The processing unit 2 takes in the input data (alternative data) formed of the numeral sequence "22849" (S102) to determine the consistency, that is, whether or not the numeral sequence coincides with the password "cathy".

In the determining processing, the determining means 4 takes in the password "cathy" registered in advance in the password storage means 5 (S103) and converts the password into a numeral sequence with reference to the table (see Fig. 2) registered in the ROM of the processing unit 2 (S104). That is, the determining means 4 figures out the numeral "2" corresponding to the first character "c" of the password "cathy", and further figures out the numeral "2" corresponding to the second character "a". Similarly, the numeral key "8" corresponding to the third character "t", the numeral key "4" corresponding to the fourth character "h" and the numeral key "9" corresponding to the fifth character "y" are figured out to thereby calculate the numeral sequence "22849" obtained by changing the password into the numerals.

Thereafter, the numeral sequence (conversion data) showing the password registered in advance and calculated by the determining means 4 is collated with the numeral sequence (input data) inputted by the operator (S105). When the conversion data coincides with the inputted date, it is considered that the inputted data is certified (S106). On the other hand, when the numeral sequence (input data) inputted by the operator is other than "22849", the conversion data does not coincide with the inputted date, so that the inputted data is not certified (S107).

Although, in the aforesaid explanation, the explanation has been made as to the case where the password is formed only of alphabetical characters, even in the case where the password is formed of Japanese syllabary characters, a password may be inputted and the inputted password may be certified in the similar manner by operating numeral keys (see Fig. 3) to which Japanese syllabary characters are allotted.

The embodiment may be arranged in a manner that when the operator operates the key input means 1, the inputting operation is clearly displayed on the display means 3 so that the operator can recognize the acceptance of the inputting operation. Fig. 5 shows statuses of the screen of the password storage means 5. As shown in Fig. 5, when the authentication processing is started, a password input request is displayed on the display means 3. Thereafter, the operator sequentially pushes the numeral keys "2", "2", "8", "4", "9" corresponding to the password "cathy". At this time, the symbols " * " are sequentially displayed on the display means 3 in response to the respective operations of the numeral keys. Thus, the operator can recognize that the inputting operations were surely accepted by viewing the displayed symbols "*". Since the numerals actually inputted by the operator are not displayed on the display means 3, the password is prevented from being leaked. In this respect, in stead of sequentially displaying the symbols at every inputting operation, the embodiment may be arranged in a manner that the inputting operation may be counted up to thereby display a numeral representing the counted number of the inputting operations.

According to the aforesaid operations, the inputting operation of the password using the ten key keyboard can be performed quickly and easily, and further the leakage of the password can be prevented. However, since the authentication is performed by using the numeral sequence which is obtained by simplifying the password, there is a risk that a third person inputs various numeral sequences repeatedly in a trial and error manner and may succeed in the authentication. Thus, in order to improve the security, the terminal is arranged to request the operator to input the password ("cathy" in this embodiment) stored in advance in the password storage means again at every lapse of a predetermine period (for example, one week, one month or one year). When the authentication procedure based on the inputted password becomes failure, the authentication procedure after that time is made impossible. In this manner, even if the third person succeeds in the authentication based on the numeral sequence which is obtained by simplifying the password, it is practically impossible for the third person to accurately input the actual password which is required to be inputted at every lapse of the predetermined period. Therefore, this embodiment can improve the security.

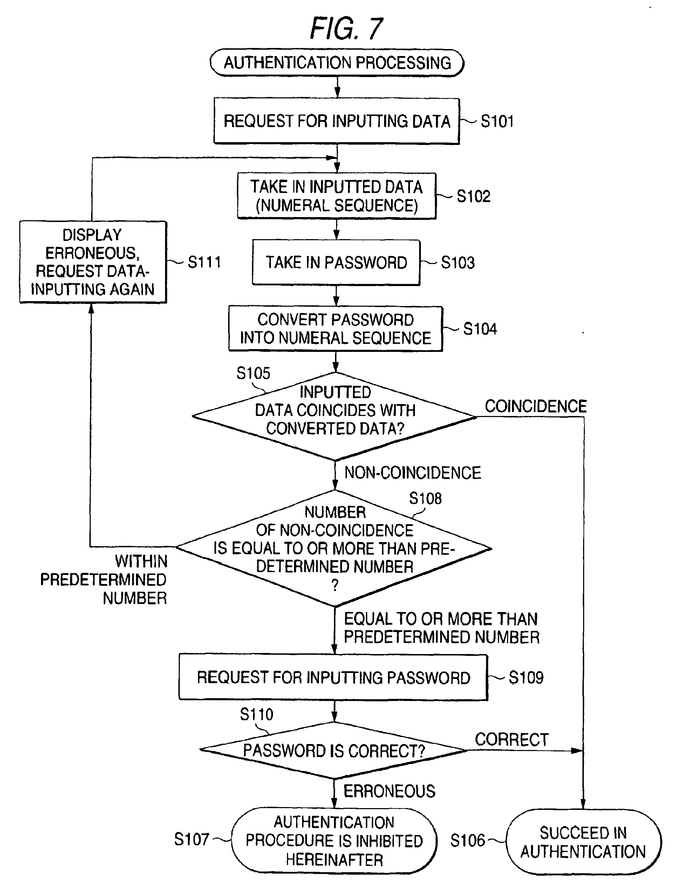

When the authentication based on the numeral sequence which is obtained by simplifying the password becomes failure, determination may be made as to whether or not the operator is a regular user or an illegal third party. As shown in Fig. 7, in the processing of S105, when it is determined that the converted data does not coincide with the inputted data, it is displayed on the display means 3 that the inputted data is erroneous and the inputting of the data is requested again (S111). Thereafter, the inputted data inputted again by the operator is compared with the converted data (S105). When the non-coincidence between the inputted data and the converted data is detected for a predetermined number of times (once or plural times) (S108), the operator is requested to input the password ("cathy" in this embodiment) stored in the password storage means in advance (S109). Then, the inputted password is compared with the password stored in the password storage means in advance (S110. In this case, when the authentication procedure using the inputted password becomes failure, any authentication procedure is inhibited hereinafter (S107). In this manner, when the authentication using the numeral sequence which is obtained by simplifying the password becomes failure, the determination can be made whether or not the operator is a regular user or an illegal third party by requesting the inputting of the actual password. Accordingly, the security can be improved.

Incidentally, when the information service terminal is used as a network terminal, it is required to transmit the password to the network and perform the authentication procedure between the terminal and the network. In this case, since the authentication procedure as to the information service terminal has been completed, the information service terminal may transmit the password of the operator ("cathy" in this embodiment) to the network. Accordingly, since the operator is not required to input the password again at the time of utilizing the external network, not only the password is prevented from being leaked but also the terminal can be connected to the network easily. Incidentally, when a password used for the authentication procedure within the information service terminal differs from a password used for the authentication procedure to the outside, that is, the network differs, the correspondence relation between the password used for the authentication within the terminal and the password used for the authentication to the outside is stored in advance. In the case of connecting to the network after the completion of the authentication procedure within the information service terminal, a password is obtained with reference to the password relating to the external network corresponding to the password within the terminal and the password thus obtained may be transmitted to the network.

As described above, according to the invention, even in the case of inputting the password by using the key inputting means such a ten key keyboard, the password can be inputted in a simplified manner by using the alternative data representing the password, the inputting operation of the password can be performed quickly and easily. Further, since the password is replaced by the alternative data, the leakage of the password to a third person can be avoided.

## Claims

1. An information service terminal comprising:
key input means (1), having a key arrangement in which a plurality of alphabetical characters are allotted to each of numerical keys,
password storage means (5) for storing a password used for authentication,
the password being a combination numerals and alphabetical of characters,
**characterised in that,**
the password being typed into the key input means by pushing each key allotted to the respective subsequent characters of the password only once to obtain alternative data corresponding to the password,
a determining means (4) being adapted for determining correspondence between said password and said alternative data to perform authentication processing in a processing unit (2) when said alternative data correspond to the password.

2. An information service terminal according to claim 1, wherein said alternative data is formed of a numeral sequence of numeral keys to which the respective characters constituting said password are allotted, respectively.

3. An information service terminal according to claim 1, further comprising display means for displaying a number of inputted operations performed by said key input means.

4. An information service terminal according to claim 1, wherein, after said authentication processing using said alternative data, said processing unit requests inputting of a password same as said password stored in said password storage means at every lapse of a predetermined period, and determines coincidence between said password thus inputted and said password stored in said password storage means to thereby perform the authentication processing based on a result of said determination.

5. An information service terminal according to claim 1, wherein, at a time of failure of said authentication processing using said alternative data, said processing unit requests inputting of a password same as said password stored in said password storage means, and determines coincidence between said password thus inputted and said password stored in said password storage means to thereby perform the authentication processing based on a result of said determination.

6. An information service terminal according to claim 1, wherein, at a time of connecting to an external network requiring authentication using a password after said authentication is succeeded in said processing, said processing unit transmits a password to said network based on said password stored in said password storage means.

## Patentansprüche

1. Informationsdienst-Endgerät, das umfasst:
eine Tasteneingabeeinrichtung (1) mit einer Tastenanordnung, in der eine Vielzahl alphabetischer Zeichen jeder von numerischen Tasten zugeordnet sind,
eine Passwort-Speichereinrichtung (5), die ein zur Authentifizierung verwendetes Passwort speichert,
wobei das Passwort eine Kombination aus Zahlen und alphabetischen Zeichen ist;
**dadurch gekennzeichnet, dass**
das Passwort in die Tasteneingabeeinrichtung eingegeben wird, indem jede Taste, die den jeweiligen folgenden Zeichen des Passworts zugeordnet ist, nur einmal gedrückt wird, um alternative Daten zu erhalten, die dem Passwort entsprechen,
eine Bestimmungseinrichtung (4), die so eingerichtet ist, dass sie eine Entsprechung zwischen dem Passwort und den alternativen Daten feststellt, um Authentifizierungsverarbeitung in einer Verarbeitungseinheit (2) durchzuführen, wenn die alternativen Daten dem Passwort entsprechen.

2. Informationsdienst-Endgerät nach Anspruch 1, wobei die alternativen Daten aus einer Zahlensequenz von Zahlentasten bestehen, denen die jeweiligen Zeichen, die das Passwort bilden, jeweils zugewiesen sind.

3. Informationsdienst-Endgerät nach Anspruch 1, das des Weiteren eine Anzeigeeinrichtung umfasst, die eine Anzahl eingegebener, durch die Tasteneingabeeinrichtung durchgeführter Bedienvorgänge anzeigt.

4. Informationsdienst-Endgerät nach Anspruch 1, wobei nach der Authentifizierungsverarbeitung unter Verwendung der alternativen Daten die Verarbeitungseinheit bei jedem Ablaufen eines vorgegebenen Zeitraums Eingabe eines Passworts anfordert, das das gleiche ist wie das in der Passwort-Speichereinrichtung gespeicherte Passwort, und Übereinstimmung zwischen dem so eingegebenen und dem in der Passwort-Speichereinrichtung gespeicherten Passwort feststellt, um so die Authentifizierungsverarbeitung auf Basis eines Ergebnisses der Feststellung durchzuführen.

5. Informationsdienst-Endgerät nach Anspruch 1, wobei bei einem Fehlschlagen der Authentifizierungsverarbeitung unter Verwendung der alternativen Daten die Verarbeitungseinheit Eingabe eines Passworts anfordert, das das gleiche ist wie das in der Passwort-Speichereinrichtung gespeicherte Passwort, und Übereinstimmung zwischen dem so eingegebenen Passwort und dem in der Passwort-Speichereinrichtung gespeicherten Passwort feststellt, um so die Authentifizierungsverarbeitung auf Basis eines Ergebnisses der Feststellung durchzuführen.

6. Informationsdienst-Endgerät nach Anspruch 1, wobei zu einem Zeitpunkt der Verbindung mit einem externen Netzwerk, das Authentifizierung unter Verwendung eines Passworts verlangt, nachdem die Authentifizierung in der Verarbeitung erfolgreich war, die Verarbeitungseinheit ein Passwort zu dem Netzwerk sendet, das auf dem in der Passwort-Speichereinrichtung gespeicherten Passwort basiert.

## Revendications

1. Terminal de service d'information comprenant :
un moyen de touche d'entrée (1), ayant un arrangement de touches dans lequel une pluralité de caractères alphabétiques est allouée à chacune des touches numériques,
un moyen de stockage de mot de passe (5) pour stocker un mot de passe utilisé pour une authentification,
le mot de passe étant une combinaison de numéros et de caractères alphabétiques,
**caractérisé en ce que**
le mot de passe étant tapé dans le moyen de touche d'entrée en poussant chaque touche allouée aux caractères respectifs consécutifs du mot de passe seulement une fois pour obtenir des données alternées correspondant au mot de passe,
un moyen de détermination (4) qui est adapté pour déterminer la correspondance entre ledit mot de passe et lesdites données alternées pour réaliser le traitement d'authentification dans une unité de traitement (2) lorsque lesdites données alternées correspondent au mot de passe.

2. Terminal de service d'information selon la revendication 1, dans lequel lesdites données alternées sont formées d'une séquence numérique de touches numériques auxquelles les caractères respectifs qui constituent ledit mot de passe sont allouées, respectivement.

3. Terminal de service d'information selon la revendication 1, comprenant de plus un moyen d'affichage pour afficher un nombre d'opérations entrées réalisées au moyen dudit moyen de touches d'entrée.

4. Terminal de service d'information selon la revendication 1, dans lequel, après ledit traitement d'authentification qui utilise lesdites données alternées, ladite unité de traitement demande l'entrée du même mot de passe que ledit mot de passe stocké dans ledit moyen de stockage de mot de passe à chaque écoulement d'une période prédéterminée, et détermine la coïncidence entre ledit mot de passe ainsi entré et ledit mot de passe stocké dans ledit moyen de stockage de mot de passe pour de ce fait réaliser le traitement d'authentification sur la base d'un résultat de ladite détermination.

5. Terminal de service d'information selon la revendication 1, dans lequel, à un moment de défaillance dudit traitement d'authentification utilisant lesdites données alternées, ladite unité de traitement demande d'entrer le même mot de passe que ledit mot de passe stocké dans ledit moyen de mémoire de mot de passe, et détermine la coïncidence entre ledit mot de passe ainsi entré et ledit mot de passe stocké dans ledit moyen de stockage de mot de passe pour de ce fait réaliser le traitement d'authentification sur la base d'un résultat de ladite détermination.

6. Terminal de service d'information selon la revendication 1, dans lequel, à un moment de connexion à un réseau externe demandant l'authentification utilisant un mot de passe après que ladite authentification est réussie dans ledit traitement, ladite unité de traitement transmet un mot de passe audit réseau sur la base dudit mot de passe stocké dans ledit moyen de stockage de mot de passe.
